**Europäisches Patentamt**

**European Patent Office**

**Office européen des brevets**

(19)

(11) Publication number : **0 405 692 B1**

# (12) EUROPEAN PATENT SPECIFICATION

(45) Date of publication of patent specification :
**13.01.93 Bulletin 93/02**

(51) Int. Cl.⁵ : **A23C 19/064,** A23C 19/14

(21) Application number : **90201720.1**

(22) Date of filing : **28.06.90**

(54) Process for the preparation of cheese and so prepared cheese.

(30) Priority : **30.06.89 NL 8901673**

(43) Date of publication of application :
**02.01.91 Bulletin 91/01**

(45) Publication of the grant of the patent :
**13.01.93 Bulletin 93/02**

(84) Designated Contracting States :
**AT BE CH DE DK FR GB IT LI LU NL SE**

(56) References cited :
EP-A- 0 281 167
FR-A- 2 526 635
ZUIVELZICHT, vol. 73, no. 8, 1981, pages
393-396; "Geautomatiseerde kaasopslag bij
"De Vijfheerenlanden" (VHL) in gebruik"
F. KOSIKOWSKI: "Cheese and fermented milk
foods", 1970, pages 235-236, Edward
Brothers, US

(56) References cited :
JOURNAL OF DAIRY SCIENCE, vol. 67, no. 7,
July 1984, pages 1397-1405, Champaign, Il-
linois, US; G.K. ZERFIRIDIS et al.:"Changes
during ripening of commercial gruyère
cheese"
VOEDINGSMIDDELENTECHNOLOGIE, vol. 8,
no. 39, September 1975, pages 12-16; G. VAN
DEN BERG et al.: "Voor-en nadelen
van "slappe" kaaspekel"

(73) Proprietor : **DMV CAMPINA B.V.**
**NCB-laan 80**
**NL-5462 GE Veghel (NL)**

(72) Inventor : **Köllmann, Clemens Johannes**
**Willibrordus**
**Dennelaar 61**
**NL-5467 JL Veghel (NL)**
Inventor : **Penders, Johannes Anthonius**
**Luciastraat 20**
**NL-6015 BA Neeritter (NL)**

(74) Representative : **Ellowicz, Leo, Drs. et al**
**Octrooibureau Polak & Charlouis Laan Copes**
**van Cattenburch 80**
**NL-2585 GD Den Haag (NL)**

## Description

The invention relates to a process for preparing cheese of the Maasdammer type and comparable types, as well to the so obtained cheeses. Maasdammer cheese is a type of hard cheese which is related to Emmentaler and Gouda cheese and which is characterized by a ripening, wherein besides the lactic acid bacteria, also propionic acid bacteria play a role.

As is usual with other hard kinds of cheese, the cheese milk previously is standardized to the desired fat content by centrifuging the cream from the full milk, such that the legally required fat content of 45-49 weight %, based on the dry substance, is obtained in the final product. A pasteurization processing of the cheese milk causes the inactivation of undesirable, non-sporulating bacteria. However, the feared sporulating butyric acid bacteria are not killed by pasteurization. With cheese of the Edam or Gouda type the butyric acid fermentation is inhibited by the brine treatment, but in the case of cheese types, wherein the propinonic acid bacteria play an important role for the ripening, such as Emmentaler and Maasdammer, a low salt content in the ripening cheese mass is desirable sothat the butyric acid fermentation is not inhibited. For this reason it is customary to subject cheese milk for these types of cheese to a so-called bactofuging treatment with the aid of a centrifuge having a high seperating power.

The so pretreated milk is turned sour by the addition of a seed culture, which besides the usual types of lactic acid bacteria for Gouda cheese also contains propionic acid bacteria of a suitable type. After the addition of this souring agent and of rennet, the milk is made sour at a suitable temperature, and when the required degree of souring has been attained, the curd is introduced into cheese moulds having the desired flat-cilindrical shape, and the cheeses are dipped in a brine bath until they reach the salt content required for this type of cheese.

Subsequently, the cheese may be provided with a coating and introduced into a conditioned room. During the pre-ripening the temperature first is so chosen that an optimum development of lactic bacteria becomes possible. Only after these lactic acid bacteria and their enzymes have favourably changed the cheese medium, the conditions during the ripening phase proper are adapted by a temperature rise, in order to enable also the development of the propionic acid germs.

In a propionic acid fermentation, contrary to a homofermentative lactic acid fermentation, considerable amounts of carbon dioxide gas are released, which leads to the forming of holes in the cheese mass, the so-called eyes. Together with de typical sweet, nut-like taste as a consequence of the propionic acid fermentation, these large eyes constitute a characteristic of cheeses of the Maasdammer type. In respect with this property they show analogy with the so-called "Swiss-type" cheeses, such as Emmentaler, and they differ clearly from Edam and Gouda cheeses. Although these last mentioned cheeses also show eyes, these are generally less numerous and smaller, i.e. that they possess a diameter of some mm, whereas the numerous holes in Maasdammer cheese in majority should have a diameter of 1-3 cm.

A process for the preparation of Maasdammer cheeses is known from Dutch patent application 8006210. Also Dutch patent application 8104797 deals with the preparation of Maasdammer cheeses. Although in the last mentioned application no details about the preparation of Maasdammer cheeses are given, this publication does indeed mention an important problem in this preparation.

This problem is the change in shape of the cheese during the ripening phase, during which the flat-cilindrical fresh cheese sags and gets a larger diameter, whereas the sidewalls adopt an undesirable convex shape. Later on in the ripening phase again a change of shape occurs, when, due to the gas evolution, the eyes are formed and especially the upper side of the cheese starts to bulge out. As a means for preventing the first mentioned change of shape the last mentioned publication proposes to apply a supporting bandage as a banderole around the fresh cheese, as is known from Dutch patent application 8101941, wherein as the material for this bandage teabag paper is chosen. Ingenious devices for wrapping unripened cheeses with such a supporting bandage have been disclosed in the above mentioned patent applications 8101941 and 8104797, as well as in patent application 8104798. If desired, the bandage can be removed again after the ripening, or it can be left in the ripened cheese as a part of the cheese crust. This last mentioned possibility is the most usual one.

Exactly this additional layer of the cheese crust, and the fact that a special machine is needed for applying the supporting bandage constitute drawbacks of this system for the preparation of Maasdammer cheese. On the other hand, omitting the bandage in the usual method of preparation leads to the above mentioned undesirable deformation.

If the cheese does not satisfy the officially precribed requirements, it cannot be sold as Maasdammer cheese, and even if in other respects it would of good quality, this means a considerable decrease of the value. For this reason research was carried out for a method for the preparation of cheese of the Maasdammer type, wherein the change of the shape remains within the prescribed limits without special supporting aids for the ripening cheese being necessary.

It has now been found that a good cheese of the Maasdammer type is obtained without using a supporting bandage around the fresh cheese, if such conditions are chosen for the pickling and the storage of the cheese after the pickling that the diameter of the cheese during the first 15 days after the pickling increases with no more than 1.5%.

If the strength of the brine, which for this kind of cheeses usually can amount to 16-17° Baumé, is increased to more than 18° Bé, for instance to 22° Bé, and for the rest one maintains the usual pickling conditions, a cheese having an increased salt content is obtained. Also the syneresis of the cheese in the brine can be influenced sothat the cheese during the pickling treatment obtains an abnormal solid content, which is difficult to be influenced later in the process. Therefore, one will preferably adapt the temperature of the pickling treatment to the increased brine strength and shorten the duration thereof, and also adapt the dry solid content of the curd, in order to obtain the correct salt and dry solids contents of the Maasdammer cheese. If one succeeds in maintaining the required parameters in the correct way, as is possible without further difficulty in view of the expert knowledge of the cheese maker, one obtains a cheese which has the suitable composition of Maasdammer cheese, but which has a considerably better resistance to deformation during the first weeks of the preripening process than a usual cheese of this type. Due to the invention it has appeared well possible to let such a cheese ripening without supporting bandage or other mechanical aid to obtain a cheese of the shape prescribed for Maasdammer cheese.

If the strength of the brine is chosen in such a way that the cheese during the first 15 days after the pickling still would change its shape too much to come within the requirements for Maasdammer cheese, it appears possible, as had been found, to keep this threatening deformation within the limits of the legal prescriptions, if the percentage of the reduction by evaporation of the cheese is increased.

The cheese ripens during the first 15 days at a temperature below 15°C in an atmosphere having a relative humidity of about 85% RH. The final ripening of the Maasdammer cheese thereafter occurs at a temperature of 18-20°C en 88-88° RH. During the preripening during the first 15 days the cheese is reduced by evaporation more or less strongly, depending of the chosen relative humidity and temperature. Now, if the relative humidity is chosen somewhat lower than usual, the reduction by evaporation will also be somewhat more than usual.

It has now been found, that if the air conditioning is adjusted so that the daily reduction of the cheese mass is at least 0.33%, the diameter of the cheese changes with less than 1.5% during the preripening which lasts 15 days.

It has appeared that if the cheese sufficiently maintains it shape during that period, the deformation during the subsequent ripening in a storehouse at 18-20°C surprisingly does not give problems anymore.

During this hot ripening phase or "heating phase" the typical propionic acid fermentation processes are starting. The gas formed in the cheese thereby gives rise to the forming of the big eyes which are the most marked characteristic of the Maasdammer cheese. As a result of this forming of eyes the cheese also obtains its typical convex upperside. The almost explosive gas forming in known methods for preparing Maasdammer cheese often may lead to unacceptable shape defects, such as the forming of fissures in the circumference of the cheese, sagging of the cheese, whereby it obtains a round side wall, a too big diameter and a too small height, and the forming of elongated holes instead of nice round eyes. In the process according to the invention eyes are formed in a regular way during the heating phase and the cheese puffs up at the upper side without the above mentioned faults occurring, but also without the use of a special supporting means.

The invention also makes it very well possible to provide the cheese with a marking by applying a stamp or a paper label. This may be done both directly after the pickling, and during the ripening phase or thereafter, without this leading to a deformed picture of the trademark in the ripened cheese. Apparently, the pickling treatment and/or the way of weight reduction during the preripening provides such a resistancy to the Maasdammer cheese as a whole, that it is sufficiently plastic for deformation in the places where this is desirable, whereas at the same time it is sufficiently firm to keep its shape, where this is necessary. However, it is also possible that due to the treatment of the invention the gas forming itself occurs more quietly sothat thereby the changes in shape occur less abruptly.

For the expert in the field of the cheese preparation it will be immediately clear how the fat content, the dry solids content the consistency of the curd have to be chosen, in order to obtain a cheese having the legally prescribed composition by the pickling treatment carried out according to the invention and the storage in the factory. For syneresis and the weight reduction in the factory influence these contents and thereby also the cheese yield. Therefore, preferably the most economical production method is chosen, with which the intended results are obtained. In this respect the conditions of the souring, curdling, separation of the curd, shaping, circulation, releasing from the mould and the like are also of importance. In this respect it is particularly desirable that the cheese is introduced into the pickling tank as soon as possible, in order to obtain an optimum result. The less intensively the pickling treatment takes place, the level of the weight reduction in the factory should be greater.

It will be clear to the expert in the field of the cheese preparation that the use of the process according to the invention is not restricted to Maasdammer cheese, but that the invention just as well can be used with other kinds of cheese which during preripening and ripening are subject to risks due to a soft texture or a particular ripening temperature. This is for instance true for Emmentaler, Jarlsberg, Gouda cheese with reduced salt content and the like.

The process according to the invention is further elucidated with the aid of the following examples.

Example 1

Raw milk was centrifuged in the usual way for adjusting the fat content and bactofuged and thermally treated for controlling the bacteriological composition, as is desired for Maasdammer cheese. By adding a souring agent which beside the usual lactic acid streptococci and lactobacilli also contains propionic acid bacteria, the milk was soured and by the addition of rennet the curdling was effected. The curd was cut and the exudated whey was separated.

In usual cheese moulds of the flat-cylindrical type the curd was shaped to blocks of the required dimensions. After the usual circulating treatment and the pressing the cheeses were removed from the mould and dipped in a number of various pickling bases.

The curdling conditions and pickling conditions in the above were so correlated with each other that the dry solids content and salt content of the pickled stayed within the limits which the expert wants to maintain for a cheese of the Maasdammer type, even though the brine strength did not have the usual value for Maasdammer cheese, but rather that which is used for cheese of e.g. the Edam type.

More particularly, the duration of the pickling had to be shortened in order to avoid that the cheese obtained an undesirable high salt content. After the pickling treatment the cheeses without a banderole were introduced into a factory storage, where they were subjected to a preripening on cheese boards placed on racks in a conditioned atmosphere at a temperature of about 13°C during 15 days. During this preripening especially the lactic acid bacteria are developed which use the residues of lactose and other fermentable ingredients, but at the same time improve the conditions for the development of propionic acid germs.

After the 15th day the cheeses were conveyed to a cheese storehouse, wherein the atmosphere was conditioned at a temperature of about 19°C. During this phase lactic acid which is present is decomposed by propionic acid bacteria, whereby a considerable gas evolution occurs. This is the cause for the forming of large eyes in the Maasdammer cheese and at the same time the cheese thereby acquires a puffing up at the upper side. In a good Maasdammer cheese this change of shape occurs without cracks occurring and without sagging of the cheese at the circumference or showing a considering enlarging of the diameter, or becoming thinner.

For the experimental cheese particular attention was given to the diameter, measured directly after the pickling bath, after the preripening and at the end of the ripening, as well to the composition of the cheese, particularly the moisture content and salt content, expressed as percentage of the dry substance.

With a brine strength, expressed in degrees Baumé, between 18 and 25° Bé, the following results were found.

**Table 1**

| Lot | Pickling conditions | | Diameter of the cheese | | | Composition, weight % | |
|---|---|---|---|---|---|---|---|
| | Strength | Temp. | After pick-ling | After pre-ripening | After ripening | Moisture | Salt on dry matter |
| nr. | °Bé | °C | cm | cm | cm | % | % |
| 1 | 18.6 | 13.7 | 36.4 | 37.1 | 37.2 | 39.8 | 2.56 |
| 2 | 22.2 | 10.6 | 36.4 | 37.0 | 37.1 | 39.6 | 2.70 |
| 3 | 18.0 | 13.2 | 36.7 | 37.2 | 37.6 | 39.8 | 2.36 |
| 4 | 18.6 | 13.2 | 36.4 | 36.7 | 36.6 | 39.6 | 2.60 |
| 5 | 22.2 | 10.8 | 36.4 | 36.7 | 36.6 | 39.1 | 2.79 |
| 6 | 18.2 | 13.5 | 36.8 | 37.3 | 37.3 | 40.0 | 2.70 |

The cheeses which showed such a limited changed in diameter, also appeared to show a good development and shape in other respects, i.e. forming of big, regularly distributed eyes and puffing up at the upper side without a too round lateral side, and also tey showed an acceptable taste development.

These results were obtained without the use of a supporting bandage.

Example 2

A number of cheeses was prepared by curdling, shaping, pressing, circulating and pickling like in example 1. They were stored at temperatures of about 13°C and at relative humidities, varying in the range of 80 to 88° RH.

At the end of the preripening lasting 15 days, the weight loss of the cheeses in percent of the starting weight and the procentual decrease or increase of the diameter were measured.

It could be derived from the results that the procentual decrease of the diameter of the cheeses, D, depended on the procentual drying loss per day, I, according to the equation:

$$D = 106.3\% - 17.74. I\%$$

At I = 0.33% weight loss per day by drying it appeared that the cheese diameter during the entire storage period in the factory did practically not change to any essential degree.

Consequently, the cheeses kept their shape well and in this case it appeared that also during the following storage at 19°C a sound cheese of the Maasdammer type was formed which showed the typical eyes and taste of Maasdammer cheese without further changes of the exterior shape than the forming of the typical puffed surface as a consequence of the forming of the eyes.

With the usual means for controlling the atmosphere during the storage in the factory the desired percentage of weight loss by drying of the cheese could be attained reproducibly.

During the storage in the factory and the subsequent ripening at elevated temperature in the storehouse all the experimental cheeses were lying without any support or bandage on cheese boards in racks sothat they could change their shape unhampered, if their consistency would give rise thereto. Cheeses having a low drying loss percentage indeed did incur shape deviations which were not considered acceptable for Maasdammer cheese.

**Claims**

1.  A process for preparing Maasdammer cheese and comparable types of cheeses, characterized in that without using a supporting bandage around the fresh cheese, such conditions are chosen for the pickling and for the storage of the cheese after the pickling that the diameter of the cheese increases with no more than 1.5% during the first 15 days after the pickling.

2. A process according to claim 1, characterized in that the brine strength is chosen at a specific gravity of 1.142 - 1.210 [18-25 ° Baumé].

3. A process according to claim 1 or 2, characterized in that the humidity level and temperature in the storage room for the fresh, pickled cheese in the factory are controlled in such a way that the daily weight loss by drying of the cheese mass is at least 0.33 weight %.

4. A process according to claim 1, 2 or 3, characterized in that the brine has a specific gravity of 1.170 - 1.190 [21-23° Bé].

5. A process according to any of claims 1-4, characterized in that the brine temperature is chosen between 10° and 14°C.

6. A process according to any of claims 1-5, characterized in that the temperature in the storage room is chosen between 10°C and 14°C.

7. A process according to any of claims 1-6, characterized in that the storage temperature is increased to 18-20°C after 15 days of storage.

**Patentansprüche**

1. Verfahren zur Herstellung von Maasdammer Käse und vergleichbaren Käsearten, dadurch gekennzeichnet, daß ohne die Verwendung einer stützenden Bandage um den frischen Käse für das Säuern und die Lagerung des Käses nach dem Säuern solche Bedingungen gewählt werden, daß der Durchmesser des Käses während der ersten 15 Tage nach dem Säuern um nicht mehr als 1,5 % zunimmt.

2. Verfahren nach Anspruch 1, dadurch gekennzeichnet, daß die Stärke der Salzlösung mit einem spezifischen Gewicht von 1,142 - 1,210 (18 - 25 °Baumé) gewählt wird.

3. Verfahren nach Anspruch 1 oder 2, dadurch gekennzeichnet, daß der Feuchtigkeitsgrad und die Temperatur im Lagerraum für den frischen, gesäuerten Käse in der Käserei derart geregelt wird, daß der tägliche Gewichtsverlust durch Trocknen der Käsemasse mindestens 0,33 Gewichtsprozent beträgt.

4. Verfahren nach Anspruch 1, 2 oder 3, dadurch gekennzeichnet, daß die Salzlösung ein spezifischen Gewicht von 1,170 - 1,190 (21 - 23 °Baumé) hat.

5. Verfahren nach einem der vorstehenden Ansprüche 1 bis 4, dadurch gekennzeichnet, daß die Temperatur der Salzlösung zwischen 10 ° und 14 °C gewählt wird.

6. Verfahren nach einem der vorstehenden Ansprüche 1 bis 5, dadurch gekennzeichnet, daß die Temperatur im Lagerraum zwischen 10 ° und 14 °C gewählt wird.

7. Verfahren nach einem der vorstehenden Ansprüche 1 bis 6, dadurch gekennzeichnet, daß die Lagertemperatur nach 15 Tagen Lagerung auf 18 °C ... 20 °C erhöht wird.

**Revendications**

1. Procédé de préparation de fromage Maasdammer et de types de fromages comparables, caractérisé en ce que, sans employer de bande de support autour du fromage frais, on choisit des conditions de saumurage et de stockage du fromage après le saumurage telles que le diamètre du fromage n'augmente pas de plus de 1,5 % au cours des 15 premiers jours suivant le saumurage.

2. Procédé selon la revendication 1, caractérisé en ce que la force de la saumure est choisie à un niveau de densité de 1,142 à 1,210 [18-25° Baumé].

3. Procédé selon la revendication 1 ou 2, caractérisé en ce que le niveau d'humidité et la température dans la salle de stockage recevant le fromage frais saumuré dans l'usine sont réglés de telle sorte que la perte de poids quotidienne par séchage de la pâte de fromage soit d'au moins 0,33 % en poids.

4. Procédé selon la revendication 1, 2 ou 3, caractérisé en ce que la saumure a une densité de 1,170 à 1,190 [21-23° Bé].

5. Procédé selon l'une quelconque des revendications 1-4, caractérisé en ce que la température de la saumure est choisie entre 10 et 14°C.

6. Procédé selon l'une quelconque des revendications 1-5, caractérisé en ce que la température dans la salle de stockage est choisie entre 10 et 14 °C.

7. Procédé selon l'une quelconque des revendications 1-6, caractérisé en ce que la température de stockage est augmentée à 18-20°C au bout de 15 jours de stockage.